# FASCICULE DE BREVET EUROPEEN

(11) **EP 4 501 680 B1**
(45) Date de publication et mention de la délivrance du brevet: **02.09.2026**
(21) Numéro de dépôt: 24191351.6
(22) Date de dépôt: 29.07.2024
(51) Int. Cl.: B60K 15/03, B60K 13/04, B60R 13/08, B62D 35/02

(54) **CARÉNAGE COMPRENANT UN SUPPORT D'ISOLATION THERMIQUE**
VERKLEIDUNG MIT EINER WÄRMEISOLATIONSHALTERUNG
FAIRING WITH THERMAL INSULATION SUPPORT

(30) Priorité: 31.07.2023 FR 2308290
(43) Date de publication de la demande: 05.02.2025
(73) Titulaire: Renault s.a.s, 92100 Boulogne Billancourt (FR)
(72) Inventeur: MATEI, Monica, 062203 BUCAREST (RO); SANDU, Marinel, 062203 BUCAREST (RO)

(56) Documents cités:
- CN-B- 101 117 971
- FR-A1- 3 003 838
- FR-A1- 3 059 977
- RO-A2- 138 570

## Description

### Domaine technique

La présente invention concerne le domaine de la technologie automobile, plus particulièrement le domaine des dispositifs améliorant l'aérodynamisme de véhicules automobiles.

L'invention concerne plus précisément un carénage configuré pour être fixé au moins en partie au réservoir de carburant d'un véhicule à ligne d'échappement courte et pour former un écran thermique de protection du réservoir contre les gaz chauds en sortie de la ligne d'échappement du véhicule.

L'invention concerne également un véhicule comportant un tel carénage.

Le principal domaine d'application envisagé concerne les véhicules automobiles à ligne d'échappement courte.

### Technique antérieure

La consommation énergétique d'un véhicule est directement liée à son aérodynamisme. Dans le but de réduire la consommation des véhicules, les constructeurs cherchent à améliorer l'aérodynamisme de la partie supérieure du corps du véhicule en lissant les formes et en masquant les parties saillantes.

Toutefois, la forme aérodynamique du dessous des carrosseries des véhicules est également importante pour diminuer leur résistance à l'air, ou traînée. La traînée est principalement engendrée par la différence de pression entre la pression de stagnation à l'avant du véhicule et la pression de base à l'arrière. Elle peut être réduite en minimisant la différence entre ces deux pressions.

Certains véhicules comportent un réservoir à carburant disposé dans une partie inférieure du véhicule de telle manière que le réservoir fasse saillie sous le véhicule, en regard de la route. Un carénage peut alors être fixé autour du réservoir pour améliorer l'aérodynamisme du véhicule ainsi que pour protéger le réservoir de toute projection en provenance de la route en phase de roulage.

Le carénage ainsi disposé entre le réservoir et la route constitue une peau de protection.

La demande FR3113383 A1 décrit un véhicule comprenant un carénage fixé sur une face inférieure du réservoir à carburant. Un autre exemple d'un carénage similaire est aussi montré par le document CN101117971B.

Par ailleurs, certains véhicules comportent une ligne d'échappement courte. La sortie de gaz d'une ligne d'échappement courte ne se situe pas à l'extrémité arrière du véhicule. Elle débouche généralement à l'avant du réservoir de carburant du véhicule. Or les gaz d'échappement en sortie d'une ligne d'échappement courte ont une température élevée, typiquement supérieure à 300 °C et pouvant dépasser 400 °C.

Par conséquent, une bonne isolation thermique est nécessaire pour éviter une surchauffe du réservoir.

En outre, les températures élevées des gaz d'échappement empêchent la mise en œuvre de fixations entre le réservoir et le carénage disposées dans le cône du flux de gaz d'échappement.

La demande WO201638266 A1 décrit un véhicule comportant une ligne d'échappement courte ainsi qu'un écran de protection thermique protégeant le tunnel recevant la ligne d'échappement et le réservoir de carburant. L'écran de protection thermique s'étend entre le réservoir et la sortie de la ligne d'échappement. Un écran aérodynamique est en outre fixé sous le réservoir. Les solutions existantes ne donnent pas entière satisfaction. Un écran de protection thermique tel que décrit dans la demande WO201638266 A1 ne constitue pas un carénage, c'est-à-dire un élément permettant d'améliorer l'aérodynamisme du véhicule. La performance aérodynamique de l'écran de protection thermique n'est pas satisfaisante. En outre, l'écran aérodynamique et l'écran de protection thermique sont directement fixés au réservoir, ce qui est susceptible de provoquer un échauffement excessif du réservoir.

Il existe donc un besoin pour proposer un carénage destiné à être fixé à un réservoir de sorte à améliorer l'aérodynamisme du véhicule tout en offrant une protection du réservoir satisfaisante contre les températures élevées des gaz en sortie de la ligne d'échappement.

Le but de l'invention est de répondre au moins en partie à ce besoin.

### Exposé de l'invention

Pour ce faire, l'invention concerne un carénage destiné à être fixé au réservoir de carburant d'un véhicule automobile, comprenant :
- un corps principal configuré pour être disposé sous le réservoir de carburant de sorte à former une portion aérodynamique et à protéger le réservoir de carburant de la chaleur des gaz d'échappement du véhicule ; et
- un support d'isolation thermique fixé au corps principal par une pluralité de premières fixations et configuré pour être fixé au réservoir de carburant par une pluralité de deuxièmes fixations.

Le carénage selon l'invention permet avantageusement de découpler thermiquement le réservoir de carburant du véhicule et le corps principal du carénage, qui est soumis au flux de gaz d'échappement en sortie de la ligne d'échappement du véhicule. En effet, le support d'isolation thermique fait l'interface entre le réservoir de carburant et le corps principal du carénage. On évite ainsi toute fixation directe entre le carénage et le réservoir. Cela assure la bonne protection du réservoir contre des températures excessives. Le carénage assure en outre le bon aérodynamisme du véhicule, en particulier lorsqu'il s'étend sur toute la largeur du véhicule.

Le corps principal forme une portion aérodynamique qui améliore l'aérodynamisme du véhicule en recouvrant la surface inférieure du réservoir de carburant.

Selon une caractéristique avantageuse, le corps principal est configuré pour être disposé dans le cône de sortie des gaz d'une ligne d'échappement courte du véhicule. Autrement dit, la ligne d'échappement du véhicule donne directement sur le carénage et les gaz d'échappement, qui forment un cône en sortie de la ligne d'échappement, circulent directement sous le corps principal du carénage.

De préférence, le carénage comprenant deux parties latérales fixées au corps principal de sorte à être disposées de part et d'autre du cône de sortie des gaz d'échappement, les parties latérales étant de préférence réalisées en matière plastique, notamment en PET ou en PP. L'utilisation de parties en matière plastique dans les zones du carénage qui sont hors du cône de sortie des gaz d'échappement permet de minimiser le poids du carénage tout en améliorant ses performances aérodynamiques. Comme les températures du carénage atteignent des valeurs moins élevées en-dehors du cône de gaz, l'utilisation de matière plastique dans ces zones est possible. Les parties latérales forment de préférence des portions aérodynamiques qui améliorent l'aérodynamisme du véhicule en recouvrant des portions de la surface inférieure du véhicule.

De préférence encore, le carénage est configuré de sorte que les premières fixations soient agencées de part et d'autre du cône de sortie des gaz d'échappement. Cela permet d'éviter que les premières fixations subissent directement les températures élevées des gaz d'échappement.

Avantageusement, le corps principal est réalisé en aluminium.

Selon un mode de réalisation de l'invention, les premières fixations sont configurées pour résister aux hautes températures, en particulier supérieures à 150 °C, à 200 °C, à 250 °C ou à 300 °C, les premières fixations étant de préférence des fixations métalliques, notamment en acier, et peuvent être en particulier des ensembles goujons-écrous.

Par « hautes températures », on entend les températures que le carénage peut atteindre en configuration de fonctionnement du véhicule, lorsque les gaz d'échappements circulent sous le carénage.

Selon une caractéristique avantageuse, les deuxièmes fixations sont des fixations métalliques ou des fixations en matière plastique, notamment des ensembles goujons-écrous métalliques ou des rivets en matière plastique. Ladite matière plastique est de préférence résistante aux hautes températures, étant par exemple du polyamide 66 (PA 66).

Selon un mode de réalisation, le support d'isolation thermique est métallique, de préférence réalisé en acier ou en aluminium.

Selon une caractéristique préférentielle, le carénage est configuré pour s'étendre sur toute la largeur du véhicule. Cela améliore l'aérodynamisme du véhicule.

L'invention a encore pour objet un véhicule automobile comportant un réservoir de carburant et un carénage selon l'invention, le support d'isolation thermique du carénage étant fixé sous le réservoir de carburant par les deuxièmes fixations.

### Brève description des dessins

[Fig 1] La figure 1 représente les sollicitations thermiques sous une partie d'un véhicule comportant un carénage selon l'invention.
[Fig 2] La figure 2 est une vue du dessous d'une partie d'un véhicule comportant un carénage selon l'invention.
[Fig 3] La figure 3 est une vue de détail du véhicule de la figure 2.
[Fig 4] La figure 4 est une vue de détail du support d'isolation thermique du véhicule de la figure 2.
[Fig 5] La figure 5 illustre le support d'isolation thermique d'un carénage selon l'invention.

### Description détaillée

Dans l'ensemble de la présente demande, les termes « vertical », « inférieur », « supérieur », « bas », « haut », « dessous », « sous », « dessus » et « sur » sont à comprendre par référence à un véhicule automobile tel qu'il est en configuration de roulage, les roues étant en contact avec le sol. Les termes « avant » et « arrière » sont à comprendre par référence à l'orientation du véhicule.

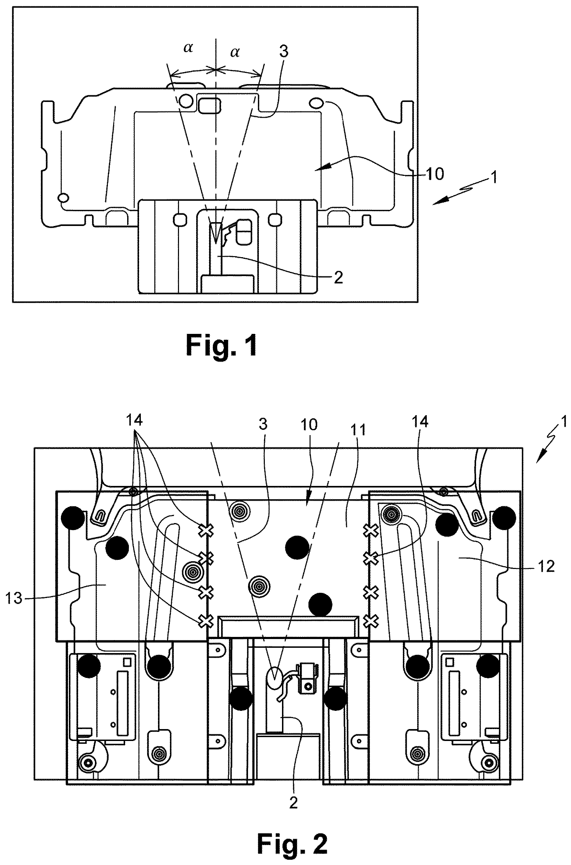

La figure 1 et la figure 2 représentent partiellement un véhicule automobile 1 vu du dessous et comportant un carénage 10 selon l'invention.

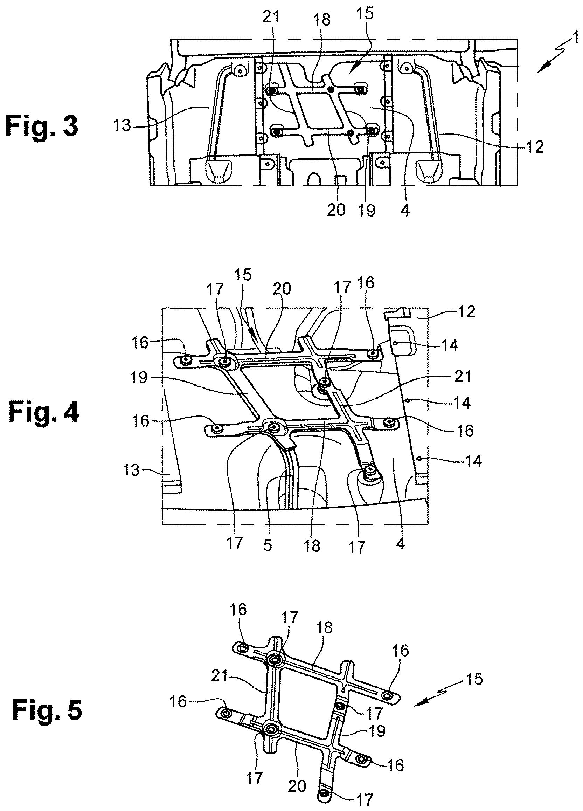

Le véhicule 1 comporte une ligne d'échappement 2 courte qui ne débouche pas à l'extrémité arrière du véhicule mais devant le réservoir de carburant. Les gaz d'échappement en sortie de la ligne d'échappement 2 forment un cône 3 dont le demi-angle α est typiquement d'environ 15°. Les gaz d'échappement en sortie de la ligne d'échappement 2 passent directement sous le carénage 10 agencé sous le réservoir de carburant 4. Le réservoir de carburant 4 est masqué par le carénage 10 sur les figures 1 et 2 mais il est visible sur la figure 3. La température du carénage 10 peut dépasser 300 °C dans le cône de gaz.

Le carénage 10 comporte un corps principal 11 réalisé en aluminium et deux parties latérales 12, 13 fixées au corps principal 11 de part et d'autre du cône de gaz par les attaches 14.

Les attaches 14 peuvent être des fixations métalliques de type rivet, notamment réalisées en aluminium.

Comme les parties latérales 12, 13 ne sont pas dans le chemin des gaz d'échappement, elles sont de préférence réalisées en matière plastique, notamment en polytéréphtalate d'éthylène PET ou en polypropylène PP, ou en matériau composite notamment à base de fibres de PP. Cela permet de minimiser le poids du carénage. Les parties latérales peuvent toutefois être réalisées en d'autres matériaux, notamment en aluminium.

Le carénage 10 s'étend avantageusement sur toute la largeur du véhicule 1. Cela améliore l'aérodynamisme du véhicule par rapport à un carénage disposé uniquement sous le réservoir de carburant.

Le corps principal 11 et les parties latérales 12, 13 forment des portions aérodynamiques.

Les figures 3 et 4 sont des vues de détail du véhicule 1 dans lesquelles le corps principal 11 est retiré afin de laisser apparaître le support d'isolation thermique 15 et le réservoir de carburant 4.

La figure 5 est une vue de détail du support d'isolation thermique 15 isolé.

Comme visible plus particulièrement à la figure 4, le réservoir de carburant 4 est fixé au châssis du véhicule par une sangle d'attache 5.

Dans l'exemple illustré, le support d'isolation thermique 15 est fixé d'une part au corps principal 11 par l'intermédiaire de quatre premières fixations 16, et d'autre part au réservoir de carburant 4 par l'intermédiaire de quatre deuxièmes fixations 17.

Les premières fixations 16 entre le support d'isolation thermique 15 et le corps principal 11 sont de préférence réalisées en un matériau métallique, par exemple en acier, car une bonne tenue à la température est requise. Les premières fixations 16 sont en effet en contact direct avec le corps principal 11 qui est soumis au flux de gaz d'échappement et dont la température peut atteindre des valeurs élevées. Les premières fixations 16 sont de préférence disposées de sorte à être agencées en-dehors du cône de gaz d'échappement afin de ne pas être soumises directement aux températures élevées de ces gaz.

Les premières fixations peuvent par exemple consister en des ensembles goujons - écrous métalliques.

Les deuxièmes fixations 17 entre le support d'isolation thermique 15 et le réservoir de carburant 4 sont de préférence réalisées en des matériaux adaptés pour résister à des hautes températures, notamment en matière plastique adaptée telle que du polyamide PA66 ou en métal tel qu'en acier ou en aluminium. Les deuxièmes fixations 17 peuvent notamment être des ensembles goujons - écrous et/ou des rivets, notamment en matière plastique.

Elles peuvent être disposées de sorte à être directement au-dessus du cône de gaz d'échappement car elles sont protégées par le corps principal 11 du carénage et ne sont pas en contact direct avec ce dernier.

Dans le mode de réalisation représenté, le support d'isolation thermique 15 est constitué d'une pièce unique comportant quatre sections substantiellement rectilignes 18, 19, 20, 21 se croisant deux à deux pour former une géométrie en forme générale de dièse.

Le support d'isolation thermique 15 est de préférence réalisé en un matériau métallique, en particulier en acier ou en aluminium.

Les sections 18, 20 peuvent être substantiellement parallèles et s'étendent substantiellement dans la largeur du véhicule, c'est-à-dire perpendiculairement à la direction avant-arrière. Les premières fixations 16 sont avantageusement disposées à chacune des extrémités de ces deux sections de sorte à être disposées en-dehors du cône de gaz d'échappement, dont l'axe s'étend dans la longueur du véhicule.

Les sections 19, 21 peuvent être substantiellement parallèles ou être inclinées l'une vers l'autre. Elles peuvent s'étendre substantiellement dans la longueur du véhicule mais peuvent également dévier significativement de cette direction.

D'autres variantes et améliorations peuvent être prévues sans pour autant sortir du cadre de l'invention. En particulier, le support d'isolation thermique peut être de toute géométrie permettant une pluralité de premières et de deuxièmes fixations selon l'invention.

## Revendications

1. Carénage (10) destiné à être fixé au réservoir de carburant d'un véhicule automobile, comprenant :
- un corps principal (11) configuré pour être disposé sous le réservoir de carburant de sorte à former une portion aérodynamique et à protéger le réservoir de carburant de la chaleur des gaz d'échappement du véhicule ; et **caractérisé en ce que**:
- un support d'isolation thermique (15) fixé au corps principal par une pluralité de premières fixations (16) et configuré pour être fixé au réservoir de carburant par une pluralité de deuxièmes fixations (17).

2. Carénage selon la revendication 1, le corps principal étant configuré pour être disposé dans le cône de sortie des gaz d'une ligne d'échappement courte du véhicule.

3. Carénage selon la revendication précédente, comprenant deux parties latérales (12, 13) fixées au corps principal de sorte à être disposées de part et d'autre du cône de sortie des gaz d'échappement, les parties latérales étant de préférence réalisées en matière plastique, notamment en PET ou en PP.

4. Carénage selon l'une des revendications 2 ou 3, configuré de sorte que les premières fixations soient agencées de part et d'autre du cône de sortie des gaz d'échappement.

5. Carénage selon l'une des revendications précédentes, le corps principal étant réalisé en aluminium.

6. Carénage selon l'une des revendications précédentes, les premières fixations étant des fixations métalliques, notamment des ensembles goujons-écrous.

7. Carénage selon l'une des revendications précédentes, les deuxièmes fixations étant des fixations métalliques ou des fixations en matière plastique, notamment des ensembles goujons-écrous métalliques ou des rivets en matière plastique.

8. Carénage selon l'une des revendications précédentes, le support d'isolation thermique étant métallique, de préférence réalisé en acier ou en aluminium.

9. Carénage selon l'une des revendications précédentes, configuré pour s'étendre sur toute la largeur du véhicule.

10. Véhicule automobile (1) comportant un réservoir de carburant (4) et un carénage selon l'une des revendications précédentes, le support d'isolation thermique du carénage étant fixé sous le réservoir de carburant par les deuxièmes fixations.

## Patentansprüche

1. Verkleidung (10), die dazu bestimmt ist, an dem Kraftstofftank eines Kraftfahrzeugs befestigt zu werden, umfassend:
- einen Hauptkörper (11), der dazu ausgebildet ist, unter dem Kraftstofftank angeordnet zu werden, so dass er einen aerodynamischen Abschnitt bildet und den Kraftstofftank vor der Hitze der Abgase des Fahrzeugs schützt; und **dadurch gekennzeichnet, dass**:
- eine Wärmeisolationshalterung (15), die an dem Hauptkörper durch eine Mehrzahl von ersten Befestigungen (16) befestigt ist und dazu ausgebildet ist, an dem Kraftstofftank durch eine Mehrzahl von zweiten Befestigungen (17) befestigt zu werden.

2. Verkleidung nach Anspruch 1, wobei der Hauptkörper dazu ausgebildet ist, im Gasaustrittskegel einer kurzen Abgasleitung des Fahrzeugs angeordnet zu werden.

3. Verkleidung nach dem vorhergehenden Anspruch, umfassend zwei seitliche Teile (12, 13), die an dem Hauptkörper so befestigt sind, dass sie beidseits des Abgasaustrittskegels angeordnet sind, wobei die seitlichen Teile vorzugsweise aus Kunststoff, insbesondere aus PET oder aus PP, ausgeführt sind.

4. Verkleidung nach einem der Ansprüche 2 oder 3, die so ausgebildet ist, dass die ersten Befestigungen beidseits des Abgasaustrittskegels angeordnet sind.

5. Verkleidung nach einem der vorhergehenden Ansprüche, wobei der Hauptkörper aus Aluminium ausgeführt ist.

6. Verkleidung nach einem der vorhergehenden Ansprüche, wobei die ersten Befestigungen Metallbefestigungen sind, insbesondere Bolzen-Mutter-Anordnungen.

7. Verkleidung nach einem der vorhergehenden Ansprüche, wobei die zweiten Befestigungen Metallbefestigungen oder Kunststoffbefestigungen sind, insbesondere metallische Bolzen-Mutter-Anordnungen oder Nieten aus Kunststoff.

8. Verkleidung nach einem der vorhergehenden Ansprüche, wobei die Wärmeisolationshalterung metallisch ist, vorzugsweise aus Stahl oder Aluminium ausgeführt ist.

9. Verkleidung nach einem der vorhergehenden Ansprüche, die dazu ausgebildet ist, sich über die gesamte Breite des Fahrzeugs zu erstrecken.

10. Kraftfahrzeug (1), das einen Kraftstofftank (4) und eine Verkleidung nach einem der vorhergehenden Ansprüche aufweist, wobei die Wärmeisolationshalterung der Verkleidung unter dem Kraftstofftank durch die zweiten Befestigungen befestigt ist.

## Claims

1. Fairing (10) intended to be fastened to the fuel tank of a motor vehicle, comprising:
- a main body (11) configured to be disposed beneath the fuel tank so as to form an aerodynamic portion and to protect the fuel tank from the heat of the exhaust gases of the vehicle; and **characterized in that**:
- a thermal insulation support (15) fastened to the main body by a plurality of first fasteners (16) and configured to be fastened to the fuel tank by a plurality of second fasteners (17).

2. Fairing according to Claim 1, the main body being configured to be disposed in the gas output cone of a short exhaust line of the vehicle.

3. Fairing according to the preceding claim, comprising two lateral parts (12, 13) fastened to the main body so as to be disposed on either side of the exhaust gas output cone, the lateral parts preferably being made of plastic material, in particular PET or PP.

4. Fairing according to either of Claims 2 and 3, configured such that the first fasteners are arranged on either side of the exhaust gas output cone.

5. Fairing according to one of the preceding claims, the main body being made of aluminium.

6. Fairing according to one of the preceding claims, the first fasteners being metal fasteners, in particular stud-nut assemblies.

7. Fairing according to one of the preceding claims, the second fasteners being metal fasteners or fasteners made of plastic material, in particular metal stud-nut assemblies or rivets made of plastic material.

8. Fairing according to one of the preceding claims, the thermal insulation support being metallic, preferably made of steel or aluminium.

9. Fairing according to one of the preceding claims, configured to extend over the entire width of the vehicle.

10. Motor vehicle (1) having a fuel tank (4) and a fairing according to one of the preceding claims, the thermal insulation support of the fairing being fastened beneath the fuel tank by the second fasteners.
